# EUROPEAN PATENT APPLICATION

(11) **EP 4 506 654 A1**
(43) Date of publication of application: **12.02.2025**
(21) Application number: 22942470.0
(22) Date of filing: 25.11.2022
(51) Int. Cl.: G01B 11/25

(54) **THREE-DIMENSIONAL INFORMATION MEASUREMENT APPARATUS AND MEASUREMENT METHOD AND ELECTRONIC DEVICE**

(30) Priority: 18.05.2022 CN 202210548042
(71) Applicant: Huawei Technologies Co., Ltd., Shenzhen, Guangdong 518129 (CN)
(72) Inventor: CHEN, Hai, Shenzhen, Guangdong 518129 (CN); WANG, Xiaowei, Shenzhen, Guangdong 518129 (CN); GENG, Wei, Shenzhen, Guangdong 518129 (CN)
(74) Representative: Maiwald GmbH
(86) International application number: PCT/CN2022/134477
(87) International publication number: WO 2023/221450

(57) **Abstract**

This application provides a three-dimensional information measurement apparatus, a measurement method, and an electronic device, to expand a measurement depth of the three-dimensional information measurement apparatus. The three-dimensional information measurement apparatus includes: a light source module, an event awareness module, and a processing module. The light source module is configured to project at least two speckle images onto a target object, and measurement depths corresponding to any two of the at least two speckle images are different. The event awareness module is configured to collect speckle images obtained through reflection of the at least two speckle images by the target object, to obtain a plurality of event images. The processing module is configured to determine three-dimensional information of the target object based on the plurality of event images.

## Description

This application claims priority to Chinese Patent Application No. 202210548042.3, filed with the China National Intellectual Property Administration on May 18, 2022 and entitled "THREE-DIMENSIONAL INFORMATION MEASUREMENT APPARATUS, MEASUREMENT METHOD, AND ELECTRONIC DEVICE", which is incorporated herein by reference in its entirety.

### TECHNICAL FIELD

This application relates to the field of optical technologies, and in particular, to a three-dimensional information measurement apparatus, a measurement method, and an electronic device.

### BACKGROUND

Three-dimensional (three-dimensional, 3D) reconstruction means to build a mathematical model that is for a three-dimensional object and that is suitable for computer representation and processing, provides a basis on which the three-dimensional object is processed and operated and properties of the three-dimensional object are analyzed in a computer environment, and is also a critical technology that builds virtual reality for representing an objective world in a computer. The three-dimensional reconstruction may also be referred to as three-dimensional information reconstruction, and the three-dimensional information reconstruction is in extensive demand for terminal devices. For example, the three-dimensional information reconstruction is in extensive demand for the terminal devices such as a human interaction device, a mobile phone, and an autonomous vehicle. Three-dimensional information of the three-dimensional object is obtained through the three-dimensional information reconstruction in the human interaction device, to obtain better game experience.

### SUMMARY

Embodiments of this application provide a three-dimensional information measurement apparatus, a measurement method, and an electronic device. The three-dimensional information measurement apparatus may project at least two speckle images corresponding to different measurement depths, to expand a measurement depth.

To achieve the foregoing objective, the following technical solutions are used in embodiments of this application.

According to a first aspect, a three-dimensional information measurement apparatus is provided, where the three-dimensional information measurement apparatus includes: a light source module, an event awareness module, and a processing module. The light source module is configured to project at least two speckle images onto a target object, and measurement depths corresponding to any two of the at least two speckle images are different. The event awareness module is configured to collect speckle images obtained through reflection of the at least two speckle images by the target object, to obtain a plurality of event images. The processing module is configured to determine three-dimensional information of the target object based on the plurality of event images.

In the foregoing technical solution, the light source module in the three-dimensional information measurement apparatus may be configured to project the at least two speckle images onto the target object, and the measurement depths corresponding to the any two of the at least two speckle images are different. The event awareness module may be configured to collect the speckle images obtained through the reflection of the at least two speckle images by the target object, to obtain the plurality of event images. The processing module may be configured to determine the three-dimensional information of the target object based on the plurality of event images. In this solution, because the measurement depths corresponding to the at least two speckle images are different, the target object in different depth ranges may be measured using the at least two speckle images, to complete measurement of the three-dimensional information of the target object in different measurement depths. This expands a depth measurement range of the three-dimensional information measurement apparatus.

In a possible implementation of the first aspect, the light source module includes one light projector. The light projector is configured to project the at least two speckle images at different focal lengths at different moments respectively. In the foregoing possible implementations, because a focal length of a speckle image is directly proportional to a measurement depth, to be specific, a smaller focal length of the speckle image indicates a smaller measurement depth corresponding to the speckle image, the light projector projects the at least two speckle images at the different focal lengths respectively, and changes focal lengths of the at least two speckle images, to enable the at least two speckle images to correspond to the different measurement depths, so that at least two speckle images corresponding to the different measurement depths are obtained. When the at least two speckle images are used for measuring the target object in different depths, a measurement range is expanded.

In a possible implementation of the first aspect, the light projector includes: a light emitter, a collimating lens whose focal length is adjustable, and a diffractive optical element. The light emitter is configured to emit a first light beam. The collimating lens whose focal length is adjustable is configured to adjust a divergence angle of the first light beam, and adjust the first light beam to correspond to different focal lengths separately, to obtain at least two light beams with different measurement depths. The diffractive optical element is configured to separately modulate the at least two light beams, to correspondingly obtain the at least two speckle images. In the foregoing possible implementations, the light projector projects the at least two speckle images at the different focal lengths respectively, and a focal length of each of the at least two speckle images is changed using the collimating lens whose focal length is adjustable, to enable the at least two speckle images to respectively correspond to the different measurement depths. The target object in different depth ranges may be measured using the at least two speckle images. This expands the measurement range.

In a possible implementation of the first aspect, the light source module includes a plurality of distributed light projectors. The plurality of light projectors are configured to project the at least two speckle images at different measurement depths at different moments respectively. In the foregoing possible implementations, when the at least two speckle images are projected using the plurality of projectors, measurement depths corresponding to the at least two speckle images are different. The at least two speckle images are projected at different measurement depths at different moments respectively, to measure the target object in different depth ranges. This expands the depth measurement range of the three-dimensional information measurement apparatus.

In a possible implementation of the first aspect, each of the plurality of light projectors includes: a light emitter, a collimating lens whose focal length is fixed, and a diffractive optical element. Measurement depths corresponding to diffractive optical elements in the different light projectors are different. The light emitter is configured to emit a second light beam. The collimating lens whose focal length is fixed is configured to adjust a divergence angle of the second light beam. The diffractive optical element is configured to modulate the second light beam and set a measurement depth of the second light beam, to obtain a speckle image corresponding to the measurement depth, where the speckle image is any one of the at least two speckle images. In the foregoing possible implementations, a measurement depth of a speckle image is changed by changing the diffractive optical element. In this way, when the at least two speckle images are projected using the plurality of projectors, the measurement depths corresponding to the at least two speckle images are different. The at least two speckle images are projected at different measurement depths at different moments respectively, to measure the target object in different depth ranges. This expands the depth measurement range of the three-dimensional information measurement apparatus.

In a possible implementation of the first aspect, the event awareness module is further configured to determine at least one event image pair based on the plurality of event images, where a distance between two event images in the event image pair is less than a preset distance. The processing module is further configured to determine the three-dimensional information of the target object based on the at least one event image pair. In the foregoing possible implementations, the event awareness module determines the at least one event image pair in the plurality of event images, to facilitate a subsequent operation of the processing module.

In a possible implementation of the first aspect, the at least two speckle images are successively projected based on a value relationship of the corresponding measurement depths. In the foregoing possible implementations, diversity of projection manners of the light source module is increased.

In a possible implementation of the first aspect, the light source module is further configured to wait for preset duration after projecting the any one of the at least two speckle images. In the foregoing possible implementations, after projecting the any one of the at least two speckle images onto the target object, the light source module waits for the preset duration, so that there is obvious pixel change on a surface of the target object, to facilitate collection of the event awareness module.

In a possible implementation of the first aspect, the three-dimensional information of the target object is determined based on the at least one event image pair and the at least two speckle images. In the foregoing possible implementations, the three-dimensional information of the target object is determined based on the at least one event image pair and the at least two speckle images, so that the three-dimensional information of the target object in different depth ranges can be obtained. This expands the measurement range.

According to a second aspect, a three-dimensional information measurement method is provided, where the method includes: projecting at least two speckle images onto a target object, where measurement depths corresponding to any two of the at least two speckle images are different; collecting speckle images obtained through reflection of the at least two speckle images by the target object, to obtain a plurality of event images; and determining three-dimensional information of the target object based on the plurality of event images.

In a possible implementation of the second aspect, the projecting at least two speckle images includes: projecting the at least two speckle images at different focal lengths at different moments respectively.

In a possible implementation of the second aspect, the method further includes: generating a first light beam; adjusting a divergence angle of the first light beam, and adjusting the first light beam to correspond to different focal lengths separately, to obtain at least two light beams with different measurement depths; and separately modulating the at least two light beams, to correspondingly obtain the at least two speckle images.

In a possible implementation of the second aspect, the projecting at least two speckle images includes: projecting the at least two speckle images at different measurement depths at different moments respectively.

In a possible implementation of the second aspect, the method further includes: generating at least two second light beams; separately adjusting divergence angles of the at least two second light beams; and separately modulating the at least two second light beams, and setting measurement depths of the at least two second light beams, to correspondingly obtain the at least two speckle images with the different measurement depths.

In a possible implementation of the second aspect, the method further includes: determining at least one event image pair based on the plurality of event images, where a distance between two event images in the event image pair is less than a preset distance; and determining the three-dimensional information of the target object based on the at least one event image pair.

In a possible implementation of the second aspect, the at least two speckle images are successively projected based on a value relationship of the corresponding measurement depths.

In a possible implementation of the second aspect, the method further includes: waiting for preset duration after projecting any one of the at least two speckle images.

In a possible implementation of the second aspect, the any two of the at least two speckle images have same luminance, a same shape, and same density.

In a possible implementation of the second aspect, the method further includes: determining the three-dimensional information of the target object based on the at least one event image pair and the at least two speckle images.

According to a third aspect, an electronic device is provided, where the electronic device includes: a three-dimensional information measurement apparatus, where the three-dimensional information measurement apparatus is the three-dimensional information measurement apparatus according to any one of the first aspect or the possible implementations of the first aspect.

It may be understood that the three-dimensional information measurement method and the electronic device that are provided above include all content of the three-dimensional information measurement apparatus provided above. Therefore, for beneficial effects that can be achieved by the three-dimensional information measurement method and the electronic device, refer to beneficial effects of the three-dimensional information measurement apparatus provided above. Details are not described herein again.

### BRIEF DESCRIPTION OF DRAWINGS

FIG. 1 is a schematic diagram of a structure of an imaging system;
FIG. 2 is a schematic diagram of a structure of another imaging system;
FIG. 3 is a schematic diagram of a structure of a terminal device according to an embodiment of this application;
FIG. 4 is a schematic diagram of a structure of a three-dimensional information measurement apparatus according to an embodiment of this application;
FIG. 5 is a schematic diagram of a structure of a light projector according to an embodiment of this application;
FIG. 6 is a schematic diagram of output signals, focal lengths of speckle images, and measurement depths of a light projector at different moments according to an embodiment of this application;
FIG. 7 is a schematic diagram of a structure of another light projector according to an embodiment of this application;
FIG. 8 is a schematic diagram of output signals and measurement depths of a plurality of light projectors at different moments according to an embodiment of this application; and
FIG. 9 is a schematic flowchart of a three-dimensional information measurement method according to an embodiment of this application.

### DESCRIPTION OF EMBODIMENTS

In this application, "at least one" means one or more, and "a plurality of" means two or more. A term "and/or" describes an association relationship between associated objects and represents that three relationships may exist. For example, A and/or B may represent three cases: Only A exists, both A and B exist, and only B exists, where A and B may be singular or plural. A character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be single or plural. In addition, in embodiments of this application, terms such as "first" and "second" are used for distinguishing between same items or similar items whose functions and effects are basically the same. For example, a first threshold and a second threshold are merely used for distinguishing between different thresholds, and do not limit a sequence thereof. A person skilled in the art may understand that the terms such as "first" and "second" do not limit a quantity or an execution sequence.

It should be noted that, in this application, words such as "example" or "for example" represent giving an example, an illustration, or a description. Any embodiment or design scheme described as an "example" or "for example" in this application should not be explained as being more preferred or having more advantages than another embodiment or design scheme. Exactly, use of the words such as "example" or "for example" is intended to present a related concept in a specific manner.

Before embodiments of this application are described, related content of three-dimensional (three-dimensional, 3D) reconstruction is first described.

The three-dimensional reconstruction means to build a mathematical model that is for a three-dimensional object and that is suitable for computer representation and processing, provides a basis on which the three-dimensional object is processed and operated and properties of the three-dimensional object are analyzed in a computer environment, and is also a critical technology that builds virtual reality for representing an objective world in a computer. The three-dimensional reconstruction may also be referred to as three-dimensional information reconstruction, and the three-dimensional information reconstruction is in extensive demand for terminal devices. For example, the three-dimensional information reconstruction is in extensive demand for the terminal devices such as a human interaction device, a mobile phone, and an autonomous vehicle. Three-dimensional information of the three-dimensional object is obtained through the three-dimensional information reconstruction in the human interaction device, to obtain better game experience. Generally, the three-dimensional information is reconstructed using the following two solutions.

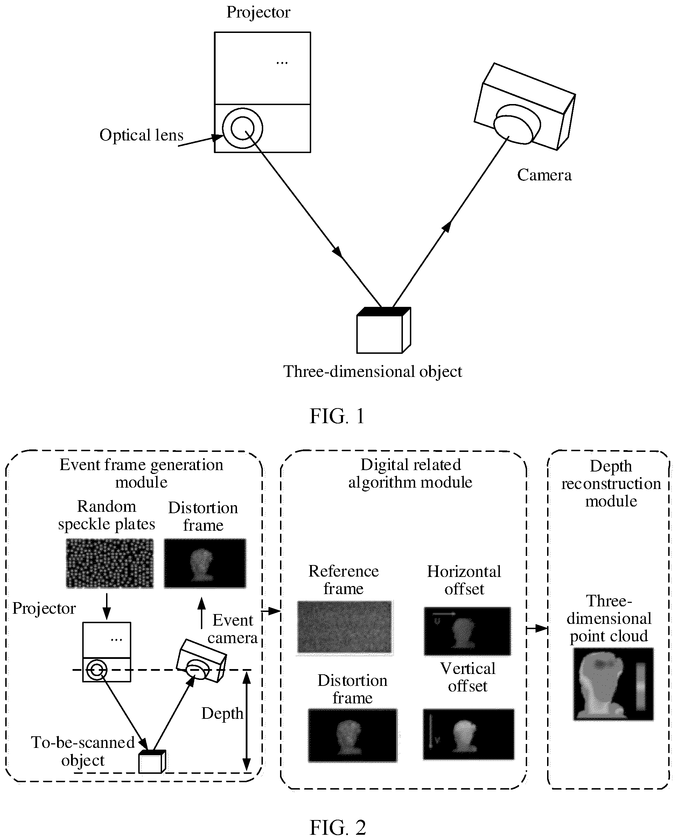

Solution 1: The 3D information reconstruction is performed using an imaging system including a projector and a camera. FIG. 1 is a schematic diagram of a structure of an imaging system. The imaging system includes: a projector having an optical lens, a camera having an infrared sensor, and a processor. Specifically, the projector projects an infrared speckle onto a 3D object through the optical lens. The camera collects, based on a fixed frame rate, light reflected from the 3D object, and generates an image. The camera sends the image to the processor. The processor calculates a depth at each position of the 3D object based on a distortion degree of the speckle in the image, to reconstruct 3D information. An infrared sensor and a processor that are of a structured light system are not shown in FIG. 1. However, in this solution, due to a limitation on a bandwidth interface of the infrared sensor, to be specific, the infrared sensor collects the reflected light at the fixed frame rate, a low frame rate of the camera is caused. In another aspect, a projection structure of the projector is fixed, and consequently, a measurement depth range corresponding to the speckle that is projected is limited, further resulting in a small measurement depth range of the imaging system.

Solution 2: The 3D information reconstruction is performed using an imaging system including a projector and an event camera. FIG. 2 is a schematic diagram of a structure of an imaging system. The imaging system includes: an event frame generation module having a projector and an event camera, and a processor having a digital related algorithm module and a depth reconstruction module. Specifically, the projector projects random speckles and black fields onto a to-be-scanned object alternately, so that a surface of the to-be-scanned object changes in bright and dark. When the surface of the to-be-scanned object changes from dark to bright or from bright to dark, the event camera senses change of light intensity to generate an event signal, and outputs the event signal in a form of a picture frame. A picture frame including the to-be-scanned object is used as a distortion frame, and a picture frame excluding the to-be-scanned object is used as a reference frame. The digital related algorithm module calculates a pixel offset (including a horizontal pixel offset and a vertical offset) between the reference frame and the distortion frame. The depth reconstruction module calculates a depth at each position of the to-be-scanned object based on the pixel offset, spatial locations of the event camera and the projector, and a calibrated parameter. In this way, the 3D information reconstruction is completed. However, in this solution, a structure of the projector is fixed, and consequently, a measurement depth range corresponding to the random speckle is limited, further resulting in a small measurement depth range of the structured light system.

Before embodiments of this application are described, related knowledge of structured light is first described.

Structured light: The structured light is a set of system structures including a projector and a camera. Specifically, after specific light information is projected onto a surface of a to-be-measured object through the projector, the camera collects light reflected by the surface of the to-be-measured object, and calculates information such as a position and a depth that are of the to-be-measured object based on change of an optical signal caused by the to-be-measured object, to restore an entire three-dimensional space of the to-be-measured object. A projection manner of light information in the structured light is actively controlled by the projector. Therefore, the structured light may also be referred to as active structured light.

Classification of light information: the light information projected by the projector may include point structured light, line structured light, and plane structured light. The point structured light uses a laser light point projected by a light emitter as a pattern, and is mainly used for ranging. The line structured light uses a line projected by a light emitter as a pattern, and is mainly used for obtaining a cross-sectional profile of a measured object. The plane structured light uses, as a pattern, a two-dimensional point array formed by speckles projected by a light emitter or uses, as a pattern, a vertical bar including time sequence coding, and is mainly used for obtaining three-dimensional information of a measured object.

Event camera: The event camera is a bionic sensor having microsecond reaction time, which may record change of luminance of a pixel, in other words, the event camera outputs the change of the luminance of the pixel. A conventional camera outputs a complete image. In comparison with the conventional camera, the event camera has advantages such as a low delay, a high dynamic range (high-dynamic range, HDR), no motion blur, extremely low power consumption, and a low data bandwidth.

An embodiment of this application provides a three-dimensional information measurement apparatus. The three-dimensional information measurement apparatus may include a light source module, an event awareness module, and a processing module. The three-dimensional information measurement apparatus may be integrated into an electronic device, and is configured to measure target objects in different depth ranges, to expand a measurement range. The electronic device may include a server and a processor, and the electronic device may also include a terminal device. The following uses an example in which the electronic device includes the terminal device for description.

The terminal device includes but is not limited to a personal computer, a server computer, a mobile device (such as a mobile phone, a tablet computer, or a media player), a wearable device, a vehicle-mounted device, a consumer terminal device, a mobile robot, an unmanned aerial vehicle, and the like. The following describes a specific structure of the terminal device.

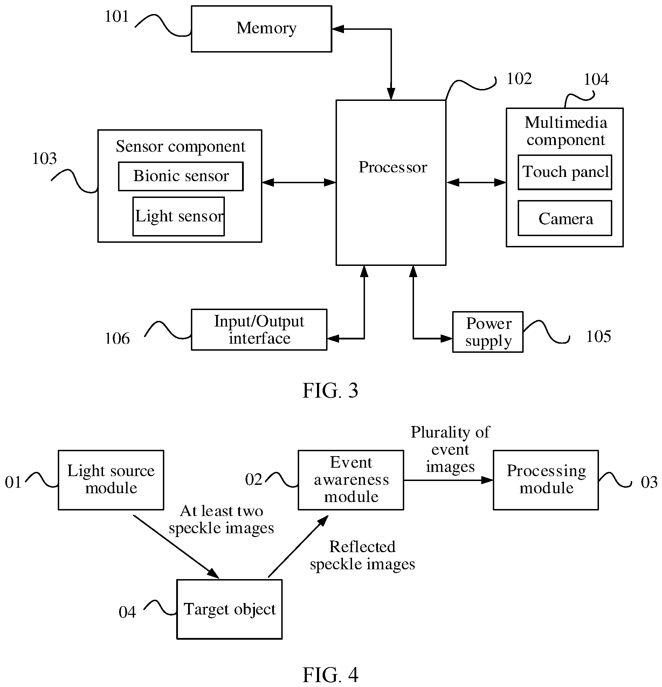

FIG. 3 is a schematic diagram of a structure of a terminal device according to an embodiment of this application. An example in which the terminal device is a mobile phone is used for description. As shown in FIG. 3, the terminal device may include: a memory 101, a processor 102, a sensor component 103, a multimedia component 104, a power supply 105, and an input/output interface 106.

The memory 101 may be configured to store data, a software program, and a software module. The memory 101 mainly includes a program storage area and a data storage area, where the program storage area may store an operating system and an application program required by at least one function, for example, a sound playing function or an image playing function. The data storage area may store data, for example, audio data, image data, or table data, created based on use of the terminal device. In addition, the terminal device may include a high-speed random access memory, and may further include a nonvolatile memory, such as at least one magnetic disk storage component, a flash memory component, or another volatile solid-state storage component.

The processor 102 is a control center of the terminal device, is connected to all parts of an entire device by using various interfaces and lines, and performs various functions of the terminal device and data processing by running or executing the software program stored in the memory 101 and/or the software module stored in the memory 101 and invoking the data stored in the memory 101. In this way, overall monitoring is performed on the terminal device. Optionally, the processor 102 may include one or more processing units. For example, the processor 102 may include a central processing unit (central processing unit, CPU), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In embodiments of this application, the processor 102 may include the processing module provided in this specification.

The sensor component 103 includes one or more sensors, and is configured to provide status evaluation in various aspects for the terminal device. The sensor component 103 may include an acceleration sensor, a gyroscope sensor, a magnetic sensor, a pressure sensor, or a temperature sensor. The sensor component 103 may detect acceleration/deceleration, an orientation, and an on/off state that are of the terminal device, relative positioning of a component, temperature change of the terminal device, or the like. In addition, the sensor component 103 may further include a light sensor, and is configured to detect light in a surrounding environment. In embodiments of this application, the sensor component 103 may further include a bionic sensor and a light sensor. The bionic sensor may be configured to sense change of luminance of a pixel on a surface of a measured object. The light sensor may be configured to emit a light source or the like.

The multimedia component 104 provides a screen of an output interface between the terminal device and a user. The screen may be a touch panel, and when the screen is a touch panel, the screen may be implemented as a touchscreen to receive an input signal from the user. The touch panel includes one or more touch sensors to sense touching, sliding, and a gesture on the touch panel. The touch sensor may not only sense a boundary of a touch action or a slide action, but also detect duration and pressure that are related to a touch operation or a slide operation. In addition, the multimedia component 104 further includes at least one camera. For example, the multimedia component 104 includes a front-facing camera and/or a rear-facing camera. When the terminal device is in an operation mode, such as a photographing mode or a video mode, the front-facing camera and/or the rear-facing camera may receive external multimedia data. Each front-facing camera or rear-facing camera may be a fixed optical lens system, or has a focal length and an optical zoom capability.

It should be noted that, an event awareness module in the following may include the bionic sensor in the sensor component 103 and the cameras in the multimedia component 104. The event awareness module may be configured to collect change of luminance of a pixel. A light source module in the following may include the light sensor in the sensor component 103 and the camera in the multimedia component 104. The light source module may emit a speckle image.

The power supply 105 is configured to supply power for each component of the terminal device. The power supply 105 may include a power supply management system, one or more power supplies, or another component related to power generation, power management, and power distribution that are of the terminal device.

The input/output interface 106 provides an interface between the processor 102 and a peripheral interface module. For example, the peripheral interface module may be a keyboard, a mouse, a universal serial bus (universal serial bus, USB) device, or the like.

Although not shown in the figure, the terminal device may further include an audio component, a communication component, and the like. For example, the audio component includes a microphone, and the communication component includes a wireless fidelity (wireless fidelity, Wi-Fi) module, a Bluetooth module, or the like. Details are not described herein in embodiments of this application. It can be understood by a person skilled in the art that, the structure of the terminal device shown in FIG. 3 does not constitute a limitation on the terminal device, and the terminal device may include more or fewer components than those shown in the figure, or some components may be combined, or the components may be disposed in a different manner.

FIG. 4 is a schematic diagram of a structure of a three-dimensional information measurement apparatus according to an embodiment of this application. The three-dimensional information measurement apparatus includes: a light source module 01, an event awareness module 02, and a processing module 03. The light source module 01 may be configured to project at least two speckle images onto a target object 04, and measurement depths corresponding to any two of the at least two speckle images are different. The event awareness module 02 may be configured to collect speckle images obtained through reflection of the at least two speckle images by the target object 04, to obtain a plurality of event images. The processing module 03 may be configured to determine thre e-dimensional information of the target object 04 based on the plurality of event images.

Any one of the at least two speckle images may be a two-dimensional point array (which is referred to as a speckle array for short in the following embodiments) formed by speckles, or a vertical bar having time sequence coding. In the following embodiments, an example in which the speckle image is the speckle array is used for description.

In addition, the at least two speckle images may include two or more speckle images. For example, the speckle image may include two speckle images or four speckle images. Measurement depths corresponding to the any two of the at least two speckle images are different.

In addition, a measurement depth is a straight-line distance between the light source module 01 and the target object 04.

In embodiments of this application, the light source module 01 is further configured to wait for preset duration after projecting the any one of the at least two speckle images. For example, the at least two speckle images include a first speckle image and a second speckle image. The light source module 01 is further configured to wait for the preset duration after projecting the first speckle image, and then project the second speckle image. In a process in which the first speckle image is projected, a pixel on a surface of the target object 04 changes from dark to bright, and after projecting the first speckle image is stopped (that is, after the preset duration), the pixel on the surface of the target object 04 changes from bright to dark.

The preset duration may be determined based on an actual requirement and experience of a person skilled in the art. This is not specifically limited in embodiments of this application.

In addition, the event awareness module 02 may include an event camera, where the event camera may include a bionic sensor and a camera. For related descriptions of the bionic sensor and the camera, refer to related descriptions of the bionic sensor and the camera that are in FIG. 3. Details are not described herein again.

Then, for each of the at least two speckle images, the event awareness module 02 is configured to collect a speckle image obtained through reflection of the speckle image by the target object 04, to obtain one or more event images, so that the plurality of event images are correspondingly obtained based on the at least two speckle images. Specifically, when luminance of a pixel on the surface of the target object 04 changes from dark to bright or from bright to dark, the event awareness module 02 may be configured to collect the speckle image obtained through reflection of the speckle image by the target object 04, to obtain the plurality of event images.

Then, each of the plurality of event images includes event image information. The event image information may include position coordinates (X, Y), a timestamp T, and an event image polarity. The position coordinates (X, Y) include position coordinates (X, Y) of each speckle in the speckle array. The timestamp T is a moment at which the event awareness module 02 collects the time image. The event image polarity indicates whether the event image is a positive event image or a negative event image. The positive event image may be represented as P+, and the negative event image may be represented as P-. The positive event image is an event image generated when the pixel on the surface of the target object 04 changes from dark to bright. The negative event image is an event image generated when the pixel on the surface of the target object 04 changes from bright to dark.

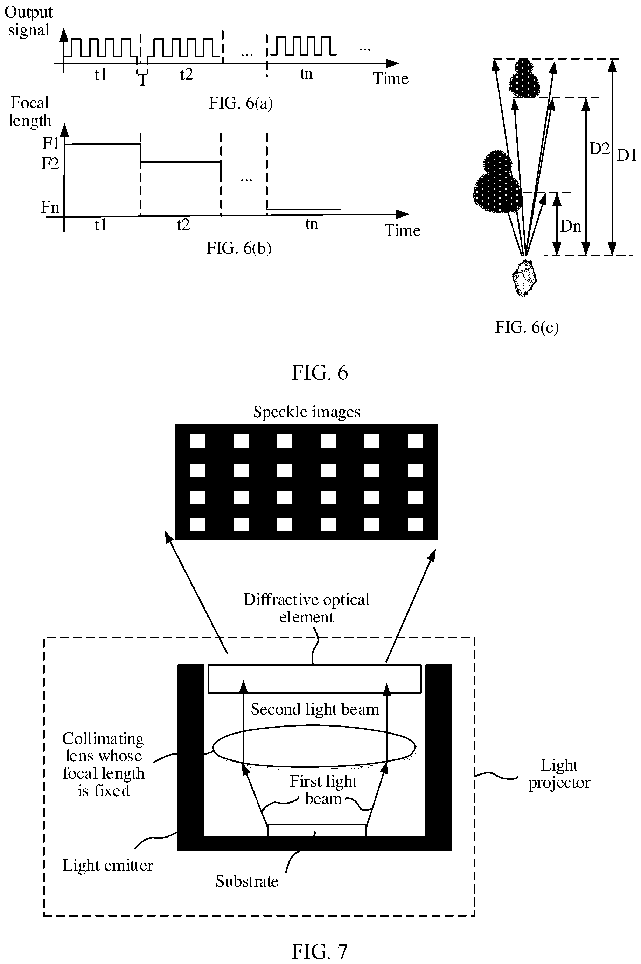

Further, the light source module 01 may include one light projector, or may include a plurality of distributed light projectors. A structure of the light projector varies with a quantity of light projectors included in the light source module 01. With reference to FIG. 6 and FIG. 7, the following separately describes two cases in which the light source module 01 includes one light projector and the light source module 01 includes a plurality of distributed light projectors. In the following embodiments, an example in which the at least two speckle images include the first speckle image and the second speckle image is used.

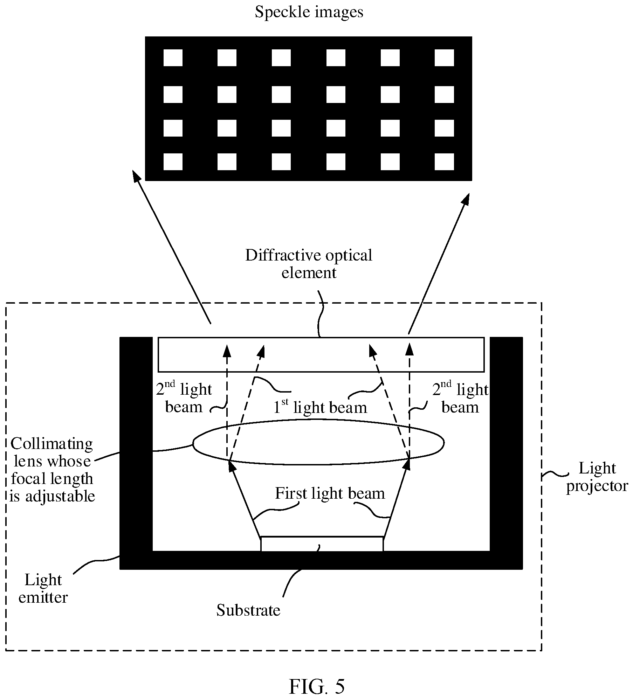

In a first possible embodiment, the light source module 01 includes one light projector. The light projector is configured to project the at least two speckle images at different focal lengths at different moments respectively. In an example, as shown in FIG. 5, the light projector includes: a light emitter, a collimating lens whose focal length is adjustable, and a diffractive optical element.

The light emitter may be configured to emit a first light beam. The first light beam is a basic light beam for generating the speckle image, and the first light beam usually has a large divergence angle. The divergence angle indicates a divergence degree of a light beam. When the divergence angle is large, it indicates that the light beam is divergent. In this case, it is not easy to focus the light beam to a point. In a possible example, the light emitter may be a laser.

The collimating lens whose focal length is adjustable may be configured to adjust the divergence angle of the first light beam, to be specific, adjust the first light beam to a light beam with a small divergence angle, so that the light beam obtained by adjusting the divergence angle can match a size of the diffractive optical element, and therefore, a speckle image can be successfully focused to a required position. The collimating lens whose focal length is adjustable is further configured to adjust the first light beam to correspond to different focal lengths separately, to obtain at least two light beams with different measurement depths. A focal length is proportional to a measurement depth. When a light beam has a small focal length, a measurement depth corresponding to the light beam is small. For example, the collimating lens whose focal length is adjustable is configured to adjust the first light beam to correspond to a first focal length F1, to obtain a 1^{st} light beam with a measurement depth D1, and adjust the first light beam to correspond to a second focal length F2, to obtain a 2^{nd} light beam with a measurement depth D2, where D1 is different from D2.

The diffractive optical element is configured to separately modulate the at least two light beams, to correspondingly obtain the at least two speckle images. For example, the diffractive optical element may separately modulate the 1^{st} light beam and the 2^{nd} light beam, so that both the 1^{st} light beam and the 2^{nd} light beam have characteristic information. For example, the characteristic information may include a speckle shape, a speckle size, an array size, light intensity, and the like. Correspondingly, the first speckle image and the second speckle image are obtained. Specifically, the diffractive optical element modulates a light beam through a lens with a micro-nano structure, so that the light beam has characteristic information.

For example, FIG. 6 is a schematic diagram of output signals, focal lengths of a speckle image, and measurement depths that are of the light projector at different moments. FIG. 6(a) is a schematic diagram of output signals and time. FIG. 6(b) is a schematic diagram of time and focal lengths of corresponding speckle images. FIG. 6(c) is a schematic diagram of different measurement depths corresponding to speckle images with different focal lengths. As shown in FIG. 6(a), a projector generates an output signal at a moment t1, where the output signal corresponds to the projected first speckle image, and the projector generates an output signal at a moment t2, where the output signal corresponds to the projected second speckle image, until the projector generates an output signal at a moment tn, where the output signal corresponds to a projected n^{th} speckle image. In addition, a time interval between every two adjacent output signals is T. As shown in FIG. 6(b), a focal length corresponding to the first speckle image is F1, and a corresponding measurement depth is D1. A focal length corresponding to the second speckle image is F2, and a corresponding measurement depth is D2. A focal length corresponding to the n^{th} speckle image is Fn. As shown in FIG.6(c), a measurement depth corresponding to a speckle image whose focal length is F1 is D1. A measurement depth corresponding to a speckle image whose focal length is F2 is D2. A measurement depth corresponding to a speckle image whose focal length is Fn is Dn, where D1 is greater than D2, and D2 is greater than Dn. A speckle image is not shown in FIG. 6.

Because a measurement depth (which may also be referred to as a focusing distance) of the speckle image is jointly determined by a focal length of a collimating lens and a diffractive optical element, in this embodiment, the light projector projects the at least two speckle images at different focal lengths at different moments. Measurement depths of different speckle images are changed by changing the focal length of the collimating lens whose focal length is adjustable. The at least two speckle images are projected at different focal lengths at different moments, to measure the target object in different depth ranges. This expands the depth measurement range of the three-dimensional information measurement apparatus.

In a second possible embodiment, the light source module 01 includes a plurality of distributed light projectors. The plurality of light projectors are configured to project the at least two speckle images at different measurement depths at different moments respectively. Each of the plurality of light projectors includes: a light emitter, a collimating lens whose focal length is fixed, and a diffractive optical element. Measurement depths corresponding to diffractive optical elements in the different light projectors are different, to be specific, lenses with micro-nano structures in the diffractive optical elements in the different light projectors are different, so that the measurement depths corresponding to the diffractive optical elements are different.

For example, FIG. 7 is a schematic diagram of a structure of a light projector. The light projector includes: a light emitter, a collimating lens whose focal length is fixed, and a diffractive optical element.

The light emitter may be configured to emit a second light beam. The second light beam is a basic light beam for generating the speckle image, and the second light beam usually has a large divergence angle.

The collimating lens whose focal length is fixed is configured to change a divergence angle of the second light beam, to be specific, adjust the second light beam to a light beam with a small divergence angle.

The diffractive optical element may be configured to modulate the second light beam and set a measurement depth of the second light beam, to obtain a speckle image corresponding to the measurement depth, where the speckle image is any one of the at least two speckle images.

In embodiments of this application, the measurement depths corresponding to the diffractive optical elements in the different light projectors are different, to be specific, the lenses with the micro-nano structures in the diffractive optical elements in the different light projectors are different, so that the measurement depths corresponding to the diffractive optical elements are different. The diffractive optical elements in the different light projectors change only corresponding measurement depths, but do not change a modulation effect on a light beam, in other words, light beams that pass through the different diffractive optical elements have same characteristic information.

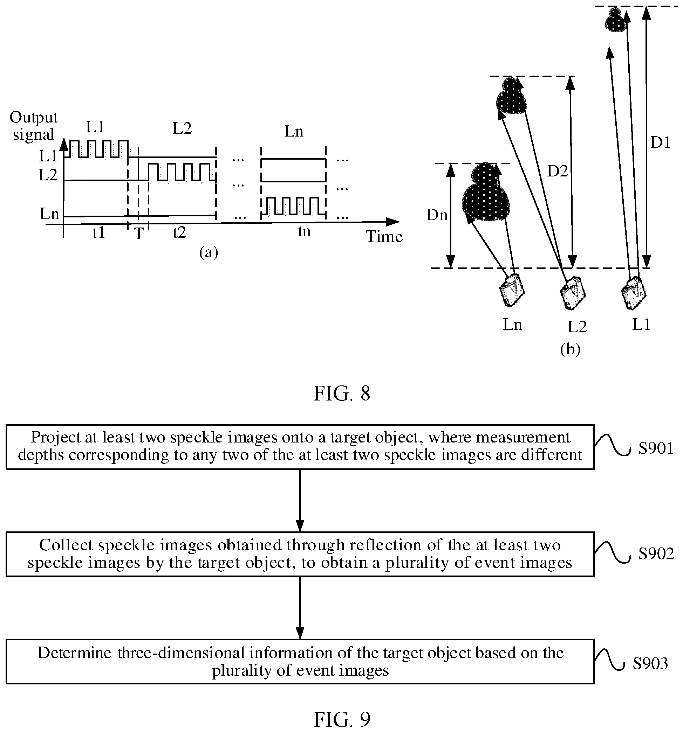

For example, FIG. 8 is a schematic diagram of output signals and measurement depths of a plurality of light projectors at different moments. (a) in FIG. 8 is a schematic diagram of time and output signals of projectors. (b) in FIG. 8 is a schematic diagram of different measurement depths corresponding to different speckle images. As shown in (a) in FIG. 8, a projector L1 generates an output signal at a moment t1, where the output signal corresponds to the projected first speckle image. A projector L2 generates an output signal at a moment t2, where the output signal corresponds to the projected second speckle image. A projector Ln generates an output signal at a moment tn, where the output signal corresponds to an output n^{th} speckle image. In addition, a time interval between every two adjacent output signals is T. As shown in (b) in FIG. 8, a measurement depth corresponding to the first speckle image is D1. A measurement depth corresponding to the second speckle image is D2. A measurement depth corresponding to the n^{th} speckle image is Dn. In (b) in FIG. 8, a case in which D1 is greater than D2, and D2 is greater than Dn is used as an example.

In this embodiment, because the diffractive optical elements in the different light projectors are different, a measurement depth of a speckle image is changed by changing the diffractive optical element. In this way, when the at least two speckle images are projected using the plurality of projectors, the measurement depths corresponding to the at least two speckle images are different. The at least two speckle images are projected at the different measurement depths at the different moments respectively, to measure the target object in different depth ranges. This expands the depth measurement range of the three-dimensional information measurement apparatus.

Optionally, the at least two speckle patterns are successively projected based on a value relationship of the corresponding measurement depths. For example, the at least two speckle patterns may be projected based on a relationship of the corresponding measurement depths in descending order, or may be projected based on a relationship of the corresponding measurement depths in ascending order. FIG. 6 and FIG. 8 are described using an example in which the at least two speckle patterns are projected in the relationship of the corresponding measurement depths in descending order.

During actual application, in addition to the foregoing light emitter, collimating lens, and diffractive optical element, the light source module 01 shown in FIG. 6 and FIG. 7 may further include a substrate, and the substrate may be configured to package the light projector.

Further, the any two of the at least two speckle images have same luminance, a same shape, and same density. Characteristic information of each of the at least two speckle images may be determined by the diffractive optical element. Therefore, characteristic information of the any two of the at least two speckle images may be the same when the any two of the at least two speckle images are emitted by the projector. For example, the any two of the at least two speckle images have the same luminance, the same shape, and the same density. However, when the at least two speckle images are projected onto a target object at different measurement depths respectively, characteristic information of reflected speckle images formed through reflection of the at least two speckle images at the different measurement depths by the target object is different. For example, density of a reflected speckle image corresponding to a speckle image with a small measurement depth is less than density of a reflected speckle image corresponding to a speckle image with a large measurement depth.

Further, the event awareness module 02 is further configured to determine at least one event image pair based on the plurality of event images, where a distance between two event images in the event image pair is less than a preset distance. The processing module 03 is further configured to determine the three-dimensional information of the target object based on the at least one event image pair.

In a possible embodiment, the event awareness module 02 traverses a plurality of event images within preset duration T1 (where the preset duration T1 is greater than a projection time interval T), to be specific, the plurality of event images may be a plurality of event images generated by one speckle image, or may be a plurality of event images generated by a plurality of speckle images. The plurality of event images include a first event image and a second event image. If event image information of the first event image includes (X1, Y1), T1, and P+, event image information of the second event image includes (X2, Y2), T2, and P-, an absolute value of a difference between X1 and X2 is less than d1, and an absolute value of a difference between Y1 and Y2 is less than d2, the first event image and the second event image are an event image pair. (X1, Y1) and (X2, Y2) are position coordinates of any speckle in the first event image and any speckle in the second event image, respectively. In this embodiment, the event awareness module 02 traverses the plurality of event images, to determine the at least one event image pair in the plurality of event images. This improves quality of an event image and facilitates a subsequent operation of the processing module 03.

Optionally, the event awareness module 02 is further configured to delete a time image (which may also be referred to as an isolated event image) other than the event image pair from the plurality of event images. The quality of the event image is improved by deleting the isolated event image from the plurality of event images. When an operation is performed on the plurality of event images from which the isolated event image is deleted, operation efficiency of the processing module 03 is improved, and accuracy of the three-dimensional information of the target object 04 is improved.

Optionally, before the light source module 01 projects the at least two speckle images, parameter calibration may be performed on the light source module 01, to obtain parameter information of the light source module 01. For example, the parameter information may include a position of the light source module 01. For a specific calibration method, refer to the conventional technology. Details are not described herein.

Similarly, before the event awareness module 02 collects the speckle images obtained through reflection of the at least two speckle images by the target object, parameter calibration may be performed on the event awareness module 02, to obtain parameter information of the event awareness module 02 and perform distortion correction on the event awareness module 02. The parameter information may include an internal parameter and an external parameter that are of the event awareness module 02. The internal parameter may include a focal length, a pixel size, and the like that are of the event awareness module 02. The external parameter may include parameters such as a position and a rotation direction that are of the event awareness module 02. For a specific calibration method, refer to the conventional technology. Details are not described herein.

Further, the event awareness module 02 is further configured to obtain reference images corresponding to the at least two speckle images, where the reference images are images collected by the event awareness module 02 when the at least two speckle images are separately projected onto a plane that is at a corresponding measurement depth and on which no target object exists.

Further, the processing module 03 is further configured to: determine the three-dimensional information of the target object 04 at different measurement depths based on the at least one event image pair in the plurality of event images, the reference images corresponding to the at least two speckle images, a calibration parameter of the event awareness module 02, and a calibration parameter of the light source module 01. Specifically, the target object 04 at one measurement depth is used as an example. The processing module 03 extracts a local binary pattern (local binary pattern, LBP) of each event image in the at least one event image pair and an LBP in the reference image corresponding to the speckle image. The LBP of each event image in the at least one event image pair includes time image information of the time image. Matching cost is calculated using an improved similarity coefficient (Jaccard similarity coefficient) distance, to obtain a depth image. The three-dimensional information of the target object is determined based on information of each pixel in the depth image. A process in which the processing module 03 determines three-dimensional information of an object based on the at least one event image pair, the reference image corresponding to the speckle image, the calibration parameter of the event awareness module, and the calibration parameter of the light source module is similar to that of the conventional technology. For details, refer to the conventional technology. Details are not described herein again.

In the three-dimensional information measurement apparatus provided in embodiments of this application, the light source module may be configured to project the at least two speckle images onto the target object, where the measurement depths corresponding to the any two of the at least two speckle images are different. The event awareness module may be configured to collect the speckle images obtained through reflection of the at least two speckle images by the target object, to obtain the plurality of event images. The processing module may be configured to determine the three-dimensional information of the target object based on the plurality of event images. In this solution, because the measurement depths corresponding to the at least two speckle images are different, the target object in different depth ranges may be measured using the at least two speckle images, to complete measurement of the three-dimensional information of the target object in different measurement depths. This expands a depth measurement range of the three-dimensional information measurement apparatus.

Based on the foregoing three-dimensional information measurement apparatus, FIG. 9 is a schematic flowchart of a three-dimensional information measurement method according to an embodiment of this application. The method may include the following steps.

S901: Project at least two speckle images onto a target object, where measurement depths corresponding to any two of the at least two speckle images are different.

Any one of the at least two speckle images may be a two-dimensional point array formed by speckles, or a vertical bar having time sequence coding.

In addition, the at least two speckle images may include two or more speckle images, and the measurement depths corresponding to the any two of the at least two speckle images are different.

Further, a projection manner of the at least two speckle images may include two projection manners. The following separately describes the two projection manners.

In a first possible embodiment, the at least two speckle images are projected at different focal lengths at different moments respectively. In this embodiment, the at least two speckle images are projected at different focal lengths at different moments respectively, to be specific, focal lengths of the any two of the at least two speckle images are different, to enable the any two speckle images to correspond to the different measurement depths, so that the target object in different depth ranges can be measured using the at least two speckle images, to expand a measurement depth.

In a second possible embodiment, the at least two speckle images are projected at different measurement depths at different moments respectively. In this embodiment, the at least two speckle images are projected at different measurement depths at different moments respectively, to be specific, the measurement depths corresponding to the any two of the at least two speckle images are different, so that the target object in different depth ranges can be measured using the at least two speckle images, to expand a measurement depth.

Optionally, the at least two speckle patterns are successively projected based on a value relationship of the corresponding measurement depths. For example, the at least two speckle patterns may be projected based on a relationship of the corresponding measurement depths in descending order, or may be projected based on a relationship of the corresponding measurement depths in ascending order.

Further, characteristic information of the any two of the at least two speckle images are the same. For example, the any two of the at least two speckle images have same luminance, a same shape, and same density.

S902: Collect speckle images obtained through reflection of the at least two speckle images by the target object, to obtain a plurality of event images.

Specifically, when luminance of a pixel on a surface of the target object changes, a speckle image obtained through reflection of the speckle image by the target object is collected, to obtain the plurality of event images. When the luminance of the pixel on the surface of the target object changes from dark to bright or from bright to dark, the speckle image obtained through reflection of the speckle image by the target object is collected, to obtain the plurality of event images.

Then, each of the plurality of event images includes event image information. The event image information may include position coordinates (X, Y), a timestamp T, and an event image polarity. The position coordinates (X, Y) include position coordinates (X, Y) of each speckle in the speckle array. The timestamp T is a moment at which the event awareness module 02 collects the time image. The event image polarity indicates whether the event image is a positive event image or a negative event image. The positive event image may be represented as P+, and the negative event image may be represented as P-.

Further, the method further includes: determining at least one event image pair based on the plurality of event images, where a distance between two event images in the event image pair is less than a preset distance; and determining three-dimensional information of the target object based on the at least one event image pair.

For example, a plurality of event images within preset duration T1 (where the preset duration T1 is greater than a projection time interval T) are traversed. The plurality of event images include a first event image and a second event image. If event image information of the first event image includes (X1, Y1), T1, and P+, event image information of the second event image includes (X2, Y2), T2, and P-, an absolute value of a difference between X1 and X2 is less than d1, and an absolute value of a difference between Y1 and Y2 is less than d2, the first event image and the second event image are an event image pair. (X1, Y1) and (X2, Y2) are position coordinates of any speckle in the first event image and any speckle in the second event image, respectively. The event awareness module traverses the plurality of event images, to determine the at least one event image pair in the plurality of event images. This improves quality of an event image and facilitates a subsequent operation of the processing module.

Further, the method further includes the following steps. A time image (which may also be referred to as an isolated event image) other than the event image pair is deleted from the plurality of event images. The quality of the event image is improved by deleting the isolated event image from the plurality of event images. When an operation is performed on the plurality of event images from which the isolated event image is deleted, operation efficiency of the processing module is improved, and accuracy of the three-dimensional information of the target object is improved.

S903: Determine the three-dimensional information of the target object based on the plurality of event images.

Optionally, the three-dimensional information of the target object is determined based on the at least one event image pair in the plurality of event images and reference images corresponding to the at least two speckle images. The reference images are images collected when the at least two speckle images are separately projected onto a plane that is at a corresponding measurement depth and on which no target object exists.

Specifically, a local binary pattern (local binary pattern, LBP) of each image in the at least one event image pair and an LBP in the reference image corresponding to the speckle image are extracted. The LBP of each event image in the at least one event image pair includes time image information of the time image. Matching cost is calculated using an improved similarity coefficient (Jaccard similarity coefficient) distance, to obtain a depth image. The three-dimensional information of the target object is determined based on information of each pixel in the depth image. A process in which the three-dimensional information of the object is determined is similar to that of the conventional technology. For details, refer to the conventional technology. Details are not described herein again.

Further, the method further includes: waiting for preset duration after projecting the any one of the at least two speckle images. Specifically, the at least two speckle images include a first speckle image and a second speckle image. After the first speckle image is projected, the second speckle image is projected after the preset duration. After the first speckle image is projected, a pixel on the surface of the target object changes from dark to bright, and an obtained event image in this case is a positive event image, and after projecting the first speckle image is stopped (that is, after the preset duration), the pixel on the surface of the target object changes from bright to dark, and an obtained event image in this case is a negative event image.

The preset duration may be determined based on an actual requirement and experience of a person skilled in the art. This is not specifically limited in embodiments of this application.

This Embodiment of this application provides the three-dimensional information measurement method. The at least two speckle images are projected onto the target object, where the measurement depths corresponding to the any two of the at least two speckle images are different. The speckle images obtained through reflection of the at least two speckle image by the target object are collected, to obtain the plurality of event images. The three-dimensional information of the target object is determined based on the plurality of event images. In this solution, because the measurement depths corresponding to the at least two speckle images are different, the target object in different depth ranges may be measured using the at least two speckle images, to complete measurement of the three-dimensional information of the target object in different measurement depths. This expands a depth measurement range of the three-dimensional information measurement apparatus.

According to another aspect of this application, an electronic device is provided. The electronic device includes a three-dimensional information measurement apparatus. The three-dimensional information measurement apparatus performs a related step in the foregoing method embodiments. The electronic device may be the controller provided in FIG. 3.

It should be noted that, the foregoing detailed descriptions about the three-dimensional information measurement apparatus may be correspondingly referenced to the embodiments corresponding to the three-dimensional information measurement method and the electronic device. Details are not described herein in embodiments of this application again.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A three-dimensional information measurement apparatus, wherein the apparatus comprises: a light source module, an event awareness module, and a processing module, wherein
the light source module is configured to project at least two speckle images onto a target object, and measurement depths corresponding to any two of the at least two speckle images are different;
the event awareness module is configured to collect speckle images obtained through reflection of the at least two speckle images by the target object, to obtain a plurality of event images; and
the processing module is configured to determine three-dimensional information of the target object based on the plurality of event images.

2. The apparatus according to claim 1, wherein the light source module comprises one light projector; and
the light projector is configured to project the at least two speckle images at different focal lengths at different moments respectively.

3. The apparatus according to claim 2, wherein the light projector comprises: a light emitter, a collimating lens whose focal length is adjustable, and a diffractive optical element, wherein
the light emitter is configured to emit a first light beam;
the collimating lens whose focal length is adjustable is configured to adjust a divergence angle of the first light beam, and adjust the first light beam to correspond to different focal lengths separately, to obtain at least two light beams with different measurement depths; and
the diffractive optical element is configured to separately modulate the at least two light beams, to correspondingly obtain the at least two speckle images.

4. The apparatus according to claim 1, wherein the light source module comprises a plurality of distributed light projectors; and
the plurality of light projectors are configured to project the at least two speckle images at different measurement depths at different moments respectively.

5. The apparatus according to claim 4, wherein each of the plurality of light projectors comprises: a light emitter, a collimating lens whose focal length is fixed, and a diffractive optical element, wherein measurement depths corresponding to diffractive optical elements in the different light projectors are different;
the light emitter is configured to emit a second light beam;
the collimating lens whose focal length is fixed is configured to adjust a divergence angle of the second light beam; and
the diffractive optical element is configured to modulate the second light beam and set a measurement depth of the second light beam, to obtain a speckle image corresponding to the measurement depth, wherein the speckle image is any one of the at least two speckle images.

6. The apparatus according to any one of claims 1 to 5, wherein
the event awareness module is further configured to determine at least one event image pair based on the plurality of event images, wherein a distance between two event images in the event image pair is less than a preset distance; and
the processing module is further configured to determine the three-dimensional information of the target object based on the at least one event image pair.

7. The apparatus according to any one of claims 1 to 6, wherein the at least two speckle images are successively projected based on a value relationship of the corresponding measurement depths.

8. The apparatus according to any one of claims 1 to 7, wherein
the light source module is further configured to wait for preset duration after projecting the any one of the at least two speckle images.

9. The apparatus according to any one of claims 1 to 8, wherein the any two of the at least two speckle images have same luminance, a same shape, and same density.

10. The apparatus according to any one of claims 6 to 9, wherein: the processing module is further configured to:
determine the three-dimensional information of the target object based on the at least one event image pair and the at least two speckle images.

11. A three-dimensional information measurement method, wherein the method comprises:
projecting at least two speckle images onto a target object, wherein measurement depths corresponding to any two of the at least two speckle images are different;
collecting speckle images obtained through reflection of the at least two speckle images by the target object, to obtain a plurality of event images; and
determining three-dimensional information of the target object based on the plurality of event images.

12. The method according to claim 11**,** wherein the projecting at least two speckle images comprises:
projecting the at least two speckle images at different focal lengths at different moments respectively.

13. The method according to claim 12, wherein the method further comprises:
generating a first light beam;
adjusting a divergence angle of the first light beam, and adjusting the first light beam to correspond to different focal lengths separately, to obtain at least two light beams with different measurement depths; and
separately modulating the at least two light beams, to correspondingly obtain the at least two speckle images.

14. The method according to claim 11, wherein the projecting at least two speckle images comprises:
projecting the at least two speckle images at different measurement depths at different moments respectively.

15. The method according to claim 14, wherein the method further comprises:
generating at least two second light beams;
separately adjusting divergence angles of the at least two second light beams; and
separately modulating the at least two second light beams, and setting measurement depths of the at least two second light beams, to correspondingly obtain the at least two speckle images with the different measurement depths.

16. The method according to any one of claims 11 to 15, wherein the method further comprises:
determining at least one event image pair based on the plurality of event images, wherein a distance between two event images in the event image pair is less than a preset distance; and
determining the three-dimensional information of the target object based on the at least one event image pair.

17. The method according to any one of claims 11 to 16, wherein the at least two speckle images are successively projected based on a value relationship of the corresponding measurement depths.

18. The method according to any one of claims 11 to 17, wherein the method further comprises: waiting for preset duration after projecting any one of the at least two speckle images.

19. The method according to any one of claims 11 to 18, wherein the any two of the at least two speckle images have same luminance, a same shape, and same density.

20. The method according to any one of claims 16 to 19, wherein the method further comprises:
determining the three-dimensional information of the target object based on the at least one event image pair and the at least two speckle images.

21. An electronic device, wherein the electronic device comprises: a three-dimensional information measurement apparatus, wherein the three-dimensional information measurement apparatus is the three-dimensional information measurement apparatus according to any one of claims 1 to 10.
